# FASCICULE DE BREVET EUROPEEN

(11) **EP 3 454 702 B1**
(45) Date de publication et mention de la délivrance du brevet: **24.06.2020**
(21) Numéro de dépôt: 17727644.1
(22) Date de dépôt: 10.05.2017
(51) Int. Cl.: A47J 43/07

(54) **BOL CHAUFFANT POUR UN SYSTEME ELECTROMENAGER**
ERWÄRMTE SCHÜSSEL FÜR EIN ELEKTRISCHES HAUSHALTSSYSTEM
HEATED BOWL FOR AN ELECTRICAL HOUSEHOLD SYSTEM

(30) Priorité: 11.05.2016 FR 1654211
(43) Date de publication de la demande: 20.03.2019
(73) Titulaire: SEB S.A., 69130 Ecully (FR)
(72) Inventeur: BLONDEL, Mathilde, 21120 Dienay (FR); TURPIN, Angéline, 21000 Dijon (FR)
(74) Mandataire: Soares, Luis Filipe
(86) Numéro de dépôt international: PCT/FR2017/051113
(87) Numéro de publication internationale: WO 2017/194877

(56) Documents cités:
- EP-A1- 2 772 165
- US-A1- 2009 084 274
- US-A1- 2013 192 477
- US-A1- 2016 120 367

## Description

La présente invention se rapporte au domaine technique général des appareils électroménagers de préparation culinaire.

Plus particulièrement, la présente invention se rapporte à un bol chauffant pour un système électroménager, à un appareil électroménager comprenant un tel bol chauffant ainsi qu'à un procédé d'utilisation d'un tel appareil électroménager.

Il est connu de la demande de brevet EP 2 772 165 A1 de disposer d'un bol chauffant comprenant une cuve, des moyens de chauffage de la cuve et un cordon d'alimentation électrique destiné à être relié à une source d'alimentation électrique pour alimenter les moyens de chauffage.

Un tel bol chauffant permet de rendre autonome les moyens de chauffage sans nécessité de devoir coupler le bol chauffant à un système électroménager.

En outre, le fonctionnement des moyens de chauffage d'un tel bol chauffant n'est pas affecté par le couplage du bol chauffant avec le système électroménager pour former un appareil électroménager.

Ainsi, les mêmes valeurs d'un paramètre de fonctionnement déterminé des moyens de chauffage, comme par exemple la température maximale de chauffage ou bien la durée maximale de chauffage, peuvent être appliquées indifféremment que le bol chauffant soit ou non couplé avec le système électroménager.

Cependant, il est parfois nécessaire d'adapter le fonctionnement des moyens de chauffage du bol chauffant en fonction de l'environnement dans lequel se trouve le bol chauffant.

Notamment, certaines valeurs de paramètres de fonctionnement des moyens de chauffage du bol chauffant sont utiles et peuvent être dangereuses pour l'utilisateur et/ou pour l'appareil électroménager lorsque le bol chauffant est couplé au système électroménager alors que ces mêmes valeurs ne sont pas forcément utiles ou dangereuses lorsque le bol chauffant est découplé au système électroménager.

C'est le cas pour certains types d'appareils électroménagers, notamment ceux utilisés pour réaliser une préparation culinaire et comportant un système électroménager avec un bras disposé au dessus de la cuve du bol chauffant et supportant un outil de travail destiné à être plongé dans la cuve, ledit outil étant généralement entrainé par le haut par un moteur via des moyens de transmission disposés dans le bras.

Sur certains modèles de ces appareils électroménagers, on peut noter l'absence d'étanchéité entre le bras et les moyens de transmission.

Or, la présence d'eau ou bien d'aliments à forte teneur en eau dans la cuve peut conduire à générer une grande quantité de vapeur d'eau lorsque la température de chauffage des moyens de chauffage ou bien lorsque la durée de chauffage est trop importante.

Ainsi, ces modèles d'appareils électroménagers présentent l'inconvénient de laisser librement pénétrer une partie de la vapeur d'eau à l'intérieur du bras.

Cette vapeur d'eau peut ensuite se condenser sur des éléments mécaniques comme par exemple les moyens de transmission ou même le moteur, ce qui à terme peut engendrer un disfonctionnement de ces éléments mécaniques et donc mener à une réduction de la durée de vie de l'appareil électroménager.

Sur ces mêmes appareils électroménagers, l'entrainement de l'outil de travail à l'intérieur de la cuve du bol chauffant peut entrainer des projections pouvant se révéler dangereuses pour l'utilisateur mais également pour l'appareil électroménager.

Il peut donc être également avantageux de pouvoir conditionner le fonctionnement du bol chauffant à la présence d'un couvercle sur la cuve lorsque le bol chauffant est couplé au système électroménager.

De même, il n'est pas forcément nécessaire de chauffer au-delà d'une température prédéfinie lorsque l'outil de travail est en mouvement dans la cuve.

Aussi, la présente invention a pour but de résoudre tout ou partie des inconvénients mentionnés ci-dessus, notamment en proposant un bol chauffant présentant plusieurs modes de fonctionnement des moyens de chauffage en fonction de l'environnement dans lequel se trouve le bol chauffant.

Un autre but de la présente invention est de proposer un appareil électroménager de préparation culinaire qui soit simple et économique à réaliser, notamment de part l'adaptation d'un bol chauffant selon l'invention à des systèmes existants d'appareils électroménagers.

A cet effet, l'invention se rapporte à un bol chauffant pour un système électroménager comprenant une cuve, des moyens de chauffage de la cuve, et un cordon d'alimentation électrique destiné à être relié à une source d'alimentation électrique pour alimenter de manière autonome les moyens de chauffage,
ledit bol chauffant étant caractérisé en ce qu'il comprend un moyen de détection du couplage du bol chauffant sur le système électroménager présentant :
- un premier état de fonctionnement défini lorsque le bol chauffant est dans une position découplée du système électroménager, et
- un deuxième état de fonctionnement distinct du premier état de fonctionnement et défini lorsque le bol chauffant est dans une position couplée avec le système électroménager,
le bol chauffant étant agencé pour fonctionner selon un premier mode de fonctionnement des moyens de chauffage lorsque le moyen de détection est dans son premier état de fonctionnement et pour fonctionner selon un deuxième mode de fonctionnement des moyens de chauffage différent du premier mode de fonctionnement lorsque le moyen de détection est dans son deuxième état de fonctionnement.

Cette disposition permet de définir deux modes de fonctionnement distincts des moyens de chauffage du bol chauffant selon que le bol chauffant est couplé ou non au système électroménager.

Selon un aspect de l'invention, le bol chauffant comprend un capteur de présence d'un couvercle de la cuve du bol chauffant présentant :
- un premier état de fonctionnement défini lorsque le couvercle est retiré de la cuve,
- un deuxième état de fonctionnement défini lorsque le couvercle est placé sur la cuve,
le bol chauffant étant agencé pour fonctionner selon un troisième mode de fonctionnement des moyens de chauffage lorsque le moyen de détection est dans son premier état de fonctionnement et que le capteur de présence du couvercle est dans son deuxième état de fonctionnement, et pour fonctionner selon un quatrième mode de fonctionnement des moyens de chauffage lorsque le moyen de détection est dans son deuxième état de fonctionnement et que le capteur de présence du couvercle est dans son deuxième état de fonctionnement.

Cette disposition permet de définir davantage de modes de fonctionnement en fonction de la présence d'un couvercle sur le bol chauffant.

Selon un aspect de l'invention, les moyens de chauffage ne sont plus alimentés électriquement lorsque le moyen de détection est dans son deuxième état de fonctionnement et que le capteur de présence du couvercle est dans son premier état de fonctionnement.

Cette disposition permet d'arrêter le chauffage lorsque le bol chauffant est couplé au système électroménager et que le bol chauffant ne comprend pas de couvercle, ce qui limite le risque de projections chaudes sur l'utilisateur et sur le système électroménager.

Selon un aspect de l'invention, le premier mode de fonctionnement et le deuxième mode de fonctionnement et le cas échéant le troisième mode de fonctionnement et le quatrième mode de fonctionnement se distinguent par la valeur d'un paramètre de fonctionnement des moyens de chauffage comprenant une température maximale de chauffage des moyens de chauffage, et/ou une durée maximale de chauffage des moyens de chauffage, et/ou une pente de la courbe de température de chauffage en fonction du temps.

Cette disposition permet de contrôler le chauffage selon plusieurs modes de fonctionnement en fonction d'un ou plusieurs paramètres de fonctionnement des moyens de chauffages.

Une durée de chauffage doit être interprétée comme un intervalle de temps au cours duquel une puissance électrique est transmise aux moyens de chauffage en vue de la convertir en puissance thermique.

Selon un aspect de l'invention, la valeur du paramètre de fonctionnement dans le premier mode de fonctionnement est supérieure à la valeur du paramètre de fonctionnement dans le deuxième mode de fonctionnement, de préférence présentant un écart compris entre 25°C et 90°C, plus préférentiellement un écart de 30°C dans le cas d'une température maximale de chauffage, de préférence un écart compris entre 2 heures et 4 heures, de préférence 3 heures dans le cas d'une durée maximale de chauffage.

Cette disposition permet de limiter la température maximale de chauffage pouvant être délivrée par les moyens de chauffage lorsque le bol chauffant est couplé à un système électroménager.

En particulier, lorsque cette température maximale est inférieure à 100°C, alors la formation de vapeur d'eau est considérablement réduite et la durée de vie de l'appareil électroménager est augmentée.

Les températures mentionnées dans la présente description correspondent à des températures utiles mesurées au niveau de la paroi interne la plus chaude de la cuve, typiquement sur le fond de la cuve du bol chauffant.

Selon un aspect de l'invention, la durée maximale de chauffage dans le premier mode de fonctionnement est définie en fonction de la température maximale de chauffage dans le premier mode de fonctionnement, et/ou la durée maximale de chauffage dans le deuxième mode de fonctionnement est définie en fonction de la température maximale de chauffage dans le deuxième mode de fonctionnement.

Cette disposition permet d'adapter la durée maximale de chauffage à la température maximale de chauffage.

Selon un aspect de l'invention, le bol chauffant comprend un dispositif de contrôle des moyens de chauffage et une interface homme-machine embarquée disposée sur un corps du bol chauffant et reliée au dispositif de contrôle, et/ou une interface homme-machine débarquée et un module récepteur disposé sur un corps du bol chauffant et relié au dispositif de contrôle.

Cette disposition permet un contrôle local des moyens de chauffage ou bien un contrôle à distance, par exemple via un terminal utilisateur apte à communiquer avec un module récepteur connecté au dispositif de contrôle.

Selon un aspect de l'invention, le moyen de détection comprend un contacteur, de préférence du type bouton poussoir.

Cette disposition permet de disposer d'un composant électronique présentant deux états de fonctionnements, simple à employer, économique et robuste.

Selon un aspect de l'invention, le bol chauffant comprend une embase agencée pour supporter une cuve amovible, et sur laquelle est relié le cordon d'alimentation électrique, le cas échéant sur laquelle est disposé l'interface homme-machine embarquée et/ou le module récepteur.

Cette disposition permet d'isoler la cuve de manière à pouvoir la laver au lave-vaisselle.

Selon un aspect de l'invention, la cuve comprend les moyens de chauffage, la cuve et l'embase comprenant chacune un couple de contacts électriques complémentaires agencé pour assurer une continuité d'alimentation électrique entre la cuve et l'embase.

Cette disposition permet d'obtenir une meilleure diffusion de chaleur vers les aliments disposés dans la cuve.

Selon un aspect de l'invention, le moyen de détection est disposé sur l'embase.

Cette disposition permet de relier directement le moyen de détection à un dispositif de contrôle des moyens de chauffage disposé dans l'embase.

La présente invention se rapporte également à un appareil électroménager de préparation culinaire comportant :
- un bol chauffant tel que décrit précédemment, et
- un système électroménager comprenant un moyen d'actionnement du moyen de détection du bol chauffant agencé pour faire basculer le moyen de détection depuis son premier état de fonctionnement vers son deuxième état de fonctionnement lorsque le bol chauffant est amené depuis sa position découplée vers sa position couplée au système électroménager, et pour faire basculer le moyen de détection depuis son deuxième état de fonctionnement vers son premier état de fonctionnement lorsque le bol chauffant est amené depuis sa position couplée au système électroménager vers sa position découplée.

Selon un aspect de l'invention, le système électroménager comprend un socle comportant un logement apte à recevoir le bol chauffant.

Selon un aspect de l'invention, le moyen d'actionnement comprend une bordure du logement.

Cette disposition assure une compatibilité entre un système électroménager d'un appareil électroménager existant et un bol chauffant selon l'invention.

Ainsi, il est possible d'obtenir un appareil électroménager de préparation culinaire simple et économique à réaliser.

Selon un aspect de l'invention, le socle et le bol chauffant comprennent chacun des moyens de fixations complémentaires, de préférence du type à baïonnette.

Cette disposition permet d'empêcher la cuve de tourner lorsqu'un outil tournant est utilisé pour mixer des aliments dans la cuve.

Selon un aspect de l'invention, le système électroménager comprend une prise d'alimentation électrique adapté au branchement électrique du cordon d'alimentation électrique du bol chauffant.

Selon un aspect de l'invention, le système électroménager est un système de préparation culinaire comprenant des moyens d'entrainement d'un outil par le haut ou par le bas.

Un appareil de préparation culinaire comprenant des moyens d'entrainement par le haut est décrit ci-après.

Typiquement, un appareil de préparation culinaire comprenant des moyens d'entrainement par le bas est du type robot multifonction. Un bras traverse alors le bol chauffant par le bas et débouche dans le récipient pour actionner un outil de travail.

Selon un aspect de l'invention, l'outil de travail se déplace dans le récipient de la cuve du bol chauffant selon un mouvement planétaire.

Selon un aspect de l'invention, le bol chauffant comprend un couvercle, l'appareil électroménager comprenant un capteur de présence du couvercle présentant :
- un premier état de fonctionnement défini lorsque le couvercle est retiré de la cuve,
- un deuxième état de fonctionnement défini lorsque le couvercle est placé sur la cuve,
le système électroménager étant agencé pour fonctionner selon un premier mode de fonctionnement d'un moteur lorsque le moyen de détection est dans son deuxième état de fonctionnement et que le capteur de présence du couvercle est dans son premier état de fonctionnement, et pour fonctionner selon un deuxième mode de fonctionnement d'un moteur lorsque le moyen de détection est dans son deuxième état de fonctionnement et que le capteur de présence du couvercle est dans son deuxième état de fonctionnement.

Cette disposition permet d'adapter le fonctionnement d'un moteur du système électroménager à la présence u on d'un couvercle sur le bol chauffant.

Enfin, la présente invention se rapporte à un procédé d'utilisation d'un appareil électroménager tel que décrit précédemment comprenant dans cet ordre des étapes consistant à :
(i) disposer le bol chauffant dans sa position découplée,
(ii) utiliser le bol chauffant selon le premier mode de fonctionnement,
(iii) disposer le bol chauffant dans sa position couplée avec le système électroménager,
(iv) utiliser le bol chauffant selon le deuxième mode de fonctionnement.

D'autres avantages et caractéristiques de l'invention ressortiront mieux à la lecture de la description détaillée de l'invention faite à titre illustratif et non limitatif en référence aux figures qui illustrent tout ou partie d'un bol chauffant et d'un appareil électroménager de préparation culinaire selon l'invention.
La figure 1 illustre un bol chauffant selon un mode de réalisation préféré de l'invention.
La figure 2 illustre une configuration particulière du bol chauffant de la figure 1.
La figure 3 est une vue de dessous du bol chauffant illustré à la figure 2.
La figure 4 illustre un bol chauffant selon le mode de réalisation préféré représenté aux figures 1 à 3 et un système électroménager sur lequel le bol chauffant est destiné à être couplé.
La figure 5 illustre un appareil électroménager comprenant le bol chauffant et le système électroménager représentés à la figure 4.
La figure 6 illustre un dispositif d'affichage d'une interface homme-machine dans un premier mode de fonctionnement du bol chauffant avec comme paramètre de fonctionnement une valeur maximale de température.
La figure 7 illustre un dispositif d'affichage d'une interface homme-machine dans un deuxième mode de fonctionnement du bol chauffant avec comme paramètre de fonctionnement une valeur maximale de température.

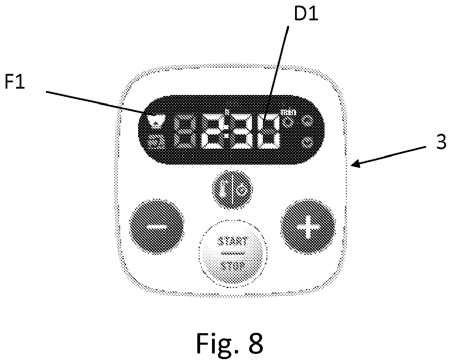

La figure 8 illustre un dispositif d'affichage d'une interface homme-machine dans un premier mode de fonctionnement du bol chauffant avec comme paramètre de fonctionnement une valeur maximale de temps de chauffage.

Seuls les éléments nécessaires à la compréhension de l'invention ont été représentés. Pour faciliter la lecture des dessins, les mêmes éléments portent les mêmes références d'une figure à l'autre.

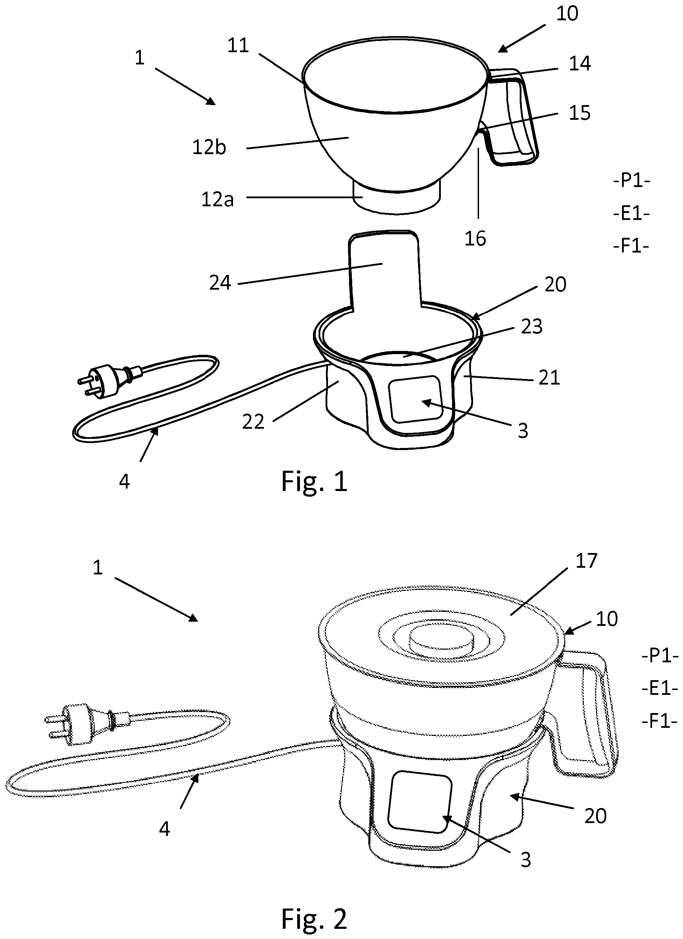

Comme illustré à la figure 1, un bol chauffant 1 pour appareil électroménager selon un mode de réalisation préféré de l'invention comprend une cuve 10 et une embase 20 aptes à être couplées.

La cuve 10 comprend un récipient 11, par exemple en inox ou en aluminium revêtu de polytétrafluoroéthylène, destiné à recevoir les aliments et comportant une base cylindrique 12a se prolongeant par un corps 12b de forme sensiblement hémisphérique.

En outre, la cuve 10 comprend une poignée 13 reliée à la paroi extérieure du corps hémisphérique 12b du récipient 11 de la cuve 10 par deux points de fixation 14, 15.

Le premier point de fixation 14 est situé à proximité de la bordure supérieure de la paroi extérieure du corps hémisphérique 12b du récipient 11 tandis que le deuxième point de fixation 15 est situé sensiblement à mi-hauteur de la paroi extérieure du corps hémisphérique 12b du récipient 11.

La forme particulière de la poignée 13 forme une échancrure 16 entre la paroi extérieure du corps hémisphérique 12b du récipient 11 et une portion de la poignée 13.

Cette échancrure 16 forme un passage pour une portion de la paroi latérale 22 d'un corps 21 de l'embase 20 lorsque la cuve 10 est couplée à l'embase 20 tout en conservant une hauteur suffisante de la poignée 13 favorisant une bonne prise en main de la poignée 13 par l'utilisateur.

La fonction de cette échancrure 16 est décrite plus en amont dans le texte.

Comme illustrée à la figure 2, la cuve 10 présente également un couvercle 17 apte à fermer le récipient 11.

Comme susmentionné, l'embase 20 comprend un corps 21 avec une paroi latérale 22.

Cette paroi latérale 22 présente sensiblement une forme de cylindre creux qui définie un logement 23 apte à recevoir une partie du récipient 11 de la cuve 10.

Cette partie de la cuve 10 comprend la base cylindrique 12a et une partie adjacente du corps hémisphérique 12b du récipient 11.

Ainsi, la paroi de ce logement 23 présente une forme sensiblement complémentaire au contour extérieur de la base cylindrique 12a du récipient 11 et au contour extérieur d'une partie adjacente du corps hémisphérique 12b du récipient 11 formant l'échancrure 16.

L'embase 20 comprend également une portion de guidage 24 du récipient 11 dans le logement 23 s'étendant depuis un bord supérieur de la paroi latérale 22 du corps 21 de l'embase 20 selon une direction sensiblement parallèle à la direction conférée par le contour extérieur du corps hémisphérique 12b du récipient 11 lorsque le récipient 11 est posé dans le logement 23, c'est-à-dire lorsque la cuve 10 est couplée à l'embase 20.

Cette portion de guidage 24 favorise également le maintien du récipient 11 dans le logement 23 de l'embase 20 et permet de former une surface d'appui pour la main d'un utilisateur lors de la manipulation de l'embase 20.

De même, des moyens d'arrêt complémentaires (non illustrés) sont disposés sur la partie du contour extérieur du récipient 11 destinée à être insérée dans le logement 23, et dans le logement 23 de l'embase 20 afin d'empêcher un mouvement relatif en rotation et/ou en translation entre la cuve 10 et l'embase 20.

Ces moyens d'arrêt peuvent par exemple être du type comprenant un couple doigt-butée, un couple tenon-mortaise ou bien un couple crochet-orifice.

Bien entendu, d'autres types de moyens d'arrêts que ceux présentés ici à titre d'exemple pourraient être envisagées sans pour autant sortir du cadre de l'invention.

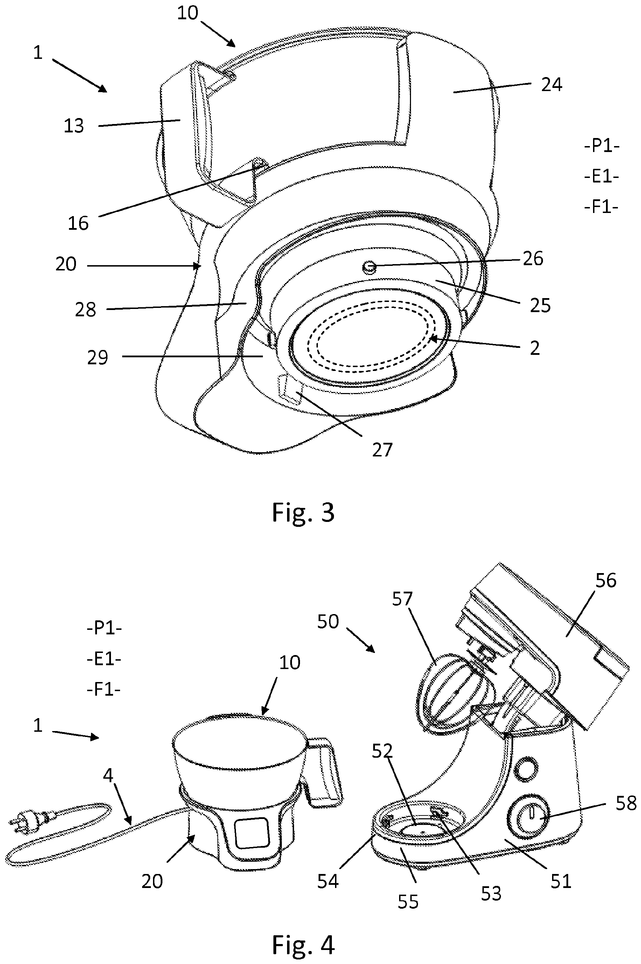

Comme illustré tout particulièrement à la figure 3, l'embase 20 comprend également une partie en saillie 25 disposée dans le prolongement du logement 23 sur une partie inférieure du corps 21.

La forme générale de cylindre et la disposition de cette partie en saillie 25 est principalement due à la forme et à la disposition dans le logement 23 d'une paroi de forme complémentaire à la base cylindrique 12a du récipient 11.

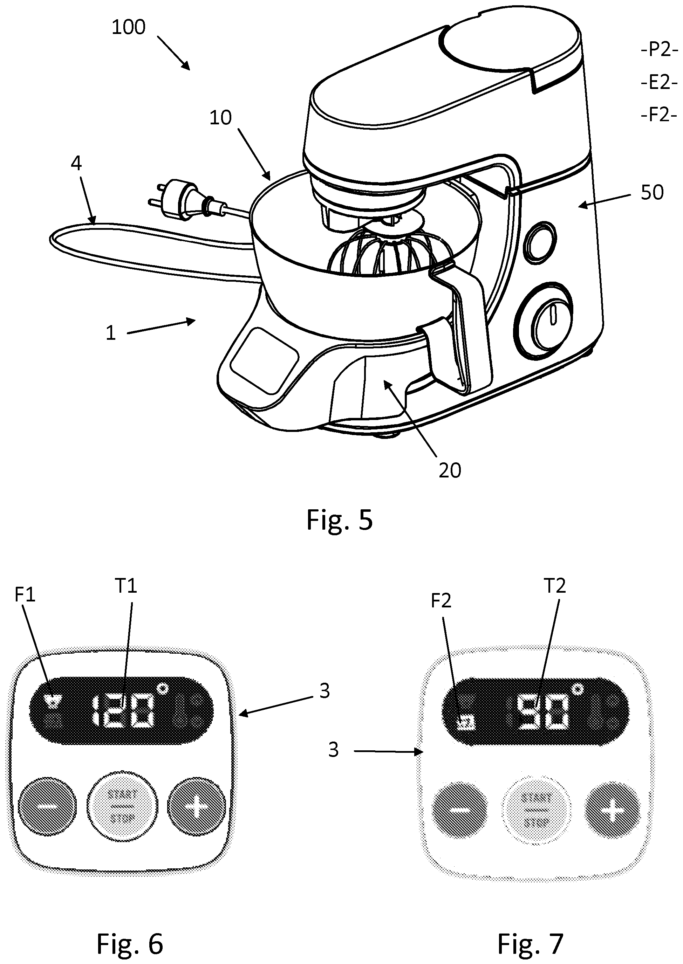

Comme illustré aux figures 4 et 5, cette partie en saillie 25 est destinée à être insérée dans un logement 52 ménagé dans un socle 51 d'un système électroménager 50.

En outre, la partie en saillie 25 comprend des moyens de fixation 26 complémentaires de moyens de fixation 53 disposés dans le logement 52 du socle 51 du système électroménager 50.

Comme illustré aux figures 3 et 4, ces moyens de fixations 26, 53 complémentaires sont du type à baïonnette.

Bien entendu, d'autres types de moyens de fixations que ceux présentés ici à titre d'exemple pourraient être envisagées sans pour autant sortir du cadre de l'invention.

Par ailleurs, dans ce mode de réalisation préféré présenté à titre d'exemple, l'embase 20 comprend des moyens de chauffage 2 de la cuve 10 disposés à l'intérieur de la partie en saillie 25.

Ces moyens de chauffage 2 comprennent une résistance thermique brasée sur la paroi arrière du fond du logement 23 de l'embase 20.

Ainsi, dans ce mode de réalisation préféré, la complémentarité de forme entre le logement 23 de l'embase 20 et une partie du récipient 11 favorise les échanges thermiques entre l'embase 20 et la cuve 10 du bol chauffant 1.

Néanmoins, d'autres modes de réalisation pourraient être envisagés sans pour autant sortir du cadre de l'invention.

Ainsi, les moyens de chauffage 2 pourraient comprendre une pluralité de résistances chauffantes alimentées séquentiellement en fonction de la puissance de chauffage désiré jusqu'à toutes les alimenter au maximum de la puissance de chauffage.

De même, les moyens de chauffage 2 pourraient être disposés directement sur le fond du récipient 11 et des couples de contacts électriques destinés à assurer une continuité d'alimentation électrique entre l'embase 20 et la cuve 10 pourraient être disposés dans le fond du récipient 11 de la cuve 10 et dans le fond du logement 23 de l'embase 20.

Par ailleurs, l'embase 20 comprend une interface homme-machine 3 reliée à un dispositif de contrôle (non illustré) des moyens de chauffage 2.

L'interface homme-machine 3 est disposée sur la paroi latérale 22 du corps 21 de l'embase 20 en direction opposée à la portion de guidage 24 de l'embase 20.

Cette interface homme-machine 3 ainsi que les moyens de chauffage 2 sont alimentés via un cordon d'alimentation électrique 4 relié directement sur la paroi latérale du corps 21 de l'embase 20 et destiné à être reliée à une source d'alimentation électrique pour alimenter de manière autonome l'interface homme-machine 3 et les moyens de chauffage 2.

Selon une variante, cette source d'alimentation électrique peut être directement disposée sur le système électroménager 50, par exemple sous la forme d'une prise électrique.

Enfin, l'embase 20 comprend un moyen de détection 27 du couplage du bol chauffant 1 sur le système électroménager 50.

Dans le mode de réalisation présenté, ce moyen de détection 27 comprend un contacteur par exemple du type bouton poussoir présentant deux états de fonctionnement E1, E2.

Le premier état de fonctionnement E1 est défini lorsque le bol chauffant 1 est dans une position découplée P1 du système électroménager 50.

Le deuxième état de fonctionnement E2 est distinct du premier état de fonctionnement E1 et est défini lorsque le bol chauffant 1 est dans une position couplée P2 avec le système électroménager 50.

Comme illustré à la figure 3, ce contacteur 27 est disposé à l'arrière de l'interface homme-machine 3 sur une paroi interne d'une jupe 28 prolongeant vers le bas la paroi latérale 22 du corps 21 de l'embase 20 et disposé en regard de la partie en saillie 25 de l'embase 20.

Ainsi, la jupe 28 et la portion en regard de la partie en saillie 25 de l'embase 20 forment un logement 29 pour le passage d'un moyen d'actionnement 54 du contacteur 27.

Dans le mode de réalisation présenté, ce moyen d'actionnement 54 comprend simplement une bordure 55 du logement 52 d'un système électroménager 50 dans lequel est destiné à être inséré la partie en saillie 25 de l'embase 20 du bol chauffant 1.

Ce mode de réalisation permet donc d'utiliser un bol chauffant 1 selon l'invention avec des systèmes électroménagers 50 existants compatibles.

Il suffit pour cela que la bordure 55 du logement 52 actionne le moyen de détection 27 lors de l'insertion du couplage du bol chauffant 1 sur le système électroménager 50.

Ainsi, le moyen d'actionnement 54 est agencé pour faire basculer le moyen de détection 27 depuis son premier état de fonctionnement E1 vers son deuxième état de fonctionnement E2 lorsque le bol chauffant 1 est amené depuis sa position découplée vers sa position couplée au système électroménager 50, et pour faire basculer le moyen de détection 27 depuis son deuxième état de fonctionnement E2 vers son premier état de fonctionnement E1 lorsque le bol chauffant 1 est amené depuis sa position couplée au système électroménager 50 vers sa position découplée.

Ces deux états de fonctionnement E1, E2 du moyen de détection 27 sont utilisés dans l'invention pour faire fonctionner le bol chauffant 1 selon deux modes de fonctionnement distincts F1, F2.

Dans un premier mode de fonctionnement F1, le dispositif de contrôle définie une première valeur T1 de température maximale de chauffage de la cuve 10.

Ce premier mode de fonctionnement F1 est déclenché lorsque le moyen de détection 27 est placé dans son premier état de fonctionnement E1.

Dans un deuxième mode de fonctionnement F2, le dispositif de contrôle définie une deuxième valeur T2 de température maximale de chauffage de la cuve 10.

Cependant, cette deuxième valeur T2 de température maximale de chauffage est inférieure à la première valeur T1 de température maximale de chauffage.

D'autres paramètres de fonctionnement peuvent être utilisés pour définir les deux modes de fonctionnement F1, F2, par exemple la durée de chauffage ou bien la pente de la courbe de température de chauffage en fonction du temps.

Ainsi, un utilisateur désireux d'utiliser un bol chauffant 1 selon l'invention commencera par une utilisation selon le premier mode de fonctionnement F1, notamment pour éliminer une grande quantité de vapeur d'eau dans les aliments à cuisiner.

Comme illustré à la figure 6, dans ce premier mode de fonctionnement F1, l'interface homme-machine 3 affiche par exemple une température maximale de chauffage T1 de la cuve 10 égale à 120°C permettant à l'utilisateur de faire varier la température de chauffage par exemple entre 20°C et 120°C.

Dans ce mode de fonctionnement F1, l'utilisateur a également la possibilité de faire varier le temps de chauffage jusqu'à 3 heures maximales.

Une fois le chauffage désiré obtenu, l'utilisateur saisi le bol chauffant 1 par l'embase 20, puis procède au couplage du bol chauffant 1 avec le système électroménager 50.

A ce moment là, le moyen de détection 27 est actionné par le moyen d'actionnement 54 ce qui automatiquement bascule le bol chauffant 1 depuis son premier mode de fonctionnement F1 vers son deuxième mode de fonctionnement F2.

Comme illustré à la figure 7, dans ce deuxième mode de fonctionnement F2, l'interface homme-machine 3 affiche par exemple une température maximale de chauffage T2 de la cuve 10 égale à 90°C permettant à l'utilisateur de faire varier la température de chauffage par exemple entre 20°C et 90°C.

Dans ce deuxième mode de fonctionnement F2, l'utilisateur a également la possibilité de faire varier le temps de chauffage jusqu'à 16 minutes maximales.

Bien entendu, le bol chauffant 1 basculera vers son premier mode de fonctionnement F1 lorsqu'il adoptera une position découplée par rapport au système électroménager 50.

La durée maximale de chauffage D1 peut également être déterminée en fonction de la température maximale de chauffage T1, T2 définie dans le premier mode de fonctionnement F1 et dans le deuxième mode de fonctionnement F2.

Comme illustré sur les figures 6 et 7, l'interface homme-machine 3 indique à l'utilisateur le mode de fonctionnement F1, F2 dans lequel se trouve le bol chauffant 1 en affichant un pictogramme correspondant.

Dans une variante, le bol chauffant 1 comprend un capteur de présence (non illustré) du couvercle 17 sur le récipient 11.

Ce capteur de présence peut par exemple être disposé directement sur la cuve 10 ou bien sur l'embase notamment sur la portion de guidage 24.

Un tel capteur peut par exemple être du type contacteur électrique.

Ce capteur présente un premier état de fonctionnement défini lorsque le couvercle 17 est retiré du récipient 11 de la cuve 10 et un deuxième état de fonctionnement défini lorsque le couvercle 17 est placé sur le récipient 11 de la cuve 10.

Le couplage du bol chauffant 1 et du système électroménager 50 forme un appareil électroménager 100 de préparation culinaire.

Le système électroménager 50 d'un tel appareil électroménager 100 comprend généralement en plus du socle 51 et du logement 52 déjà mentionnés ci-dessus, un bras 56 mobile entre une position de travail et une position relevée, un outil de travail 57 ainsi qu'une interface homme-machine 58 dédiée par exemple pour régler la vitesse de rotation de l'outil de travail 57.

Typiquement, l'outil de travail 57 se déplace selon un mouvement planétaire à l'intérieur du récipient 11 de la cuve 10 lorsque l'appareil électroménager 100 est en position de marche.

Dans une variante, le couvercle 17 présente une échancrure (non illustrée) permettant de ménager un passage pour le bras 56 et l'outil de travail 57 du système électroménager 50 lorsque le bol chauffant 1 est couplé au système électroménager 50.

Le récipient 11 du bol chauffant 1 peut ainsi conserver son couvercle 17 même lorsque le bras 56 est dans sa position de travail.

Dans cette variante de réalisation, le bol chauffant 1 comprend également un capteur de présence (non illustré) du couvercle 17 sur le récipient 11.

Un tel capteur peut par exemple être du type contacteur électrique.

Ce capteur présente un premier état de fonctionnement défini lorsque le couvercle 17 est retiré du récipient 11 de la cuve 10 et un deuxième état de fonctionnement défini lorsque le couvercle 17 est placé sur le récipient 11 de la cuve 10.

En outre, le bol chauffant 1 est agencé pour fonctionner selon un troisième mode de fonctionnement des moyens de chauffage 2 lorsque le moyen de détection 27 est dans son premier état de fonctionnement E1 et que le capteur de présence du couvercle 17 est dans son deuxième état de fonctionnement, et pour fonctionner selon un quatrième mode de fonctionnement des moyens de chauffage 2 lorsque le moyen de détection 27 est dans son deuxième état de fonctionnement E1 et que le capteur de présence du couvercle est dans son deuxième état de fonctionnement.

Lorsque le capteur de présence est dans son premier état de fonctionnement on retrouve simplement un fonctionnement selon le premier mode de fonctionnement F1 et le deuxième mode de fonctionnement 2.

Cependant, lorsque le capteur de présence est dans son deuxième état de fonctionnement, c'est-à-dire lorsque le couvercle 17 est placé sur le récipient de la cuve alors il est possible de redéfinir des valeurs de paramètres de fonctionnement différentes de celles définies pour le premier mode de fonctionnement F1 et pour le deuxième mode de fonctionnement F2.

Ainsi, il est possible de définir une valeur de température maximale de chauffage ou une valeur maximale de tout autre paramètre de fonctionnement dans le troisième mode de fonctionnement supérieure ou inférieure selon l'application envisagée à la valeur de température maximale de chauffage T1 ou à la valeur maximale de tout autre paramètre de fonctionnement définie dans le premier mode de fonctionnement F1.

De même, il est possible de définir une valeur de température maximale de chauffage ou une valeur maximale de tout autre paramètre de fonctionnement dans le quatrième mode de fonctionnement supérieure ou inférieure selon l'application envisagée à la valeur de température maximale de chauffage T2 ou à la valeur maximale de tout autre paramètre de fonctionnement défini dans le deuxième mode de fonctionnement F2.

Il est également possible de ne plus alimenter électriquement les moyens de chauffage 2 lorsque le moyen de détection 27 est dans son deuxième état de fonctionnement E2 et que le capteur de présence du couvercle 17 est dans son premier état de fonctionnement.

Ainsi, il n'est pas autoriser de chauffer lorsque le bol chauffant 1 est couplé au système électroménager 50.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

Ainsi, dans une variante de réalisation non représentée, le bol chauffant pourra être réalisé en une seule partie sans embase.

Ainsi, dans d'autres variantes de réalisation non représentée, d'autres types de moyens de détection ou d'autres types de moyens d'actionnement pourraient être utilisés.

Dans d'autres variantes encore, l'interface home-machine est débarquée sur un terminal utilisateur, par exemple un smartphone, et l'embase comprend un module récepteur relié au dispositif de contrôle, ce module récepteur étant apte à communiquer avec le terminal utilisateur.

Il est également concevable d'envisager plusieurs modes de fonctionnement du système électroménager avec un paramètre de fonctionnement du moteur, par exemple la vitesse du moteur, le système électroménager basculant d'un mode de fonctionnement à l'autre en fonction de la présence ou non du couvercle sur le bol chauffant 1.

En particulier, la vitesse du moteur du système électroménager 50 est réduite lorsque le bol chauffant 1 ne comprend pas son couvercle 17.

La détection du couvercle peut être réalisée par un capteur disposé sur le bol chauffant tel que celui décrit précédemment ou bien par un capteur disposé sur le système électroménager 50, notamment un capteur optique.

## Revendications

1. Bol chauffant (1) pour système électroménager (50) comprenant une cuve (10), des moyens de chauffage (2) de la cuve (10), et un cordon d'alimentation électrique (4) destiné à être relié à une source d'alimentation électrique pour alimenter de manière autonome les moyens de chauffage (2),
ledit bol chauffant (1) étant **caractérisé en ce qu'**il comprend un moyen de détection (27) du couplage du bol chauffant (1) sur le système électroménager (50) présentant :
- un premier état de fonctionnement (E1) défini lorsque le bol chauffant (1) est dans une position découplée (P1) du système électroménager (50), et
- un deuxième état de fonctionnement (E2) distinct du premier état de fonctionnement (E1) et défini lorsque le bol chauffant (1) est dans une position couplée (P2) avec le système électroménager (50),
le bol chauffant (1) étant agencé pour fonctionner selon un premier mode de fonctionnement (F1) des moyens de chauffage (2) lorsque le moyen de détection (27) est dans son premier état de fonctionnement (E1) et pour fonctionner selon un deuxième mode de fonctionnement (F2) des moyens de chauffage (2) différent du premier mode de fonctionnement (F1) lorsque le moyen de détection (27) est dans son deuxième état de fonctionnement (F2).

2. Bol chauffant (1) selon la revendication 1, comprenant un capteur de présence d'un couvercle (17) de la cuve (10) du bol chauffant (1) présentant :
- un premier état de fonctionnement défini lorsque le couvercle est retiré de la cuve (10),
- un deuxième état de fonctionnement défini lorsque le couvercle est placé sur la cuve (10),
le bol chauffant (1) étant agencé pour fonctionner selon un troisième mode de fonctionnement des moyens de chauffage (2) lorsque le moyen de détection (27) est dans son premier état de fonctionnement (E1) et que le capteur de présence du couvercle est dans son deuxième état de fonctionnement, et pour fonctionner selon un quatrième mode de fonctionnement des moyens de chauffage (2) lorsque le moyen de détection (27) est dans son deuxième état de fonctionnement (E2) et que le capteur de présence du couvercle est dans son deuxième état de fonctionnement.

3. Bol chauffant (1) selon l'une des revendications 1 ou 2, dans lequel les moyens de chauffage ne sont plus alimentés électriquement lorsque le moyen de détection (27) est dans son deuxième état de fonctionnement (E2) et que le capteur de présence du couvercle (17) est dans son premier état de fonctionnement.

4. Bol chauffant (1) selon l'une des revendications 1 à 3, dans lequel le premier mode de fonctionnement (F1) et le deuxième mode de fonctionnement (F2) et le cas échéant le troisième mode de fonctionnement et le quatrième mode de fonctionnement se distinguent par la valeur d'un paramètre de fonctionnement des moyens de chauffage comprenant une température maximale de chauffage (T1, T2) des moyens de chauffage (2), et/ou une durée maximale de chauffage (D1) des moyens de chauffage (2), et/ou une pente de la courbe de température de chauffage en fonction du temps.

5. Bol chauffant (1) selon la revendication 4, dans lequel la valeur du paramètre de fonctionnement dans le premier mode de fonctionnement (F1) est supérieure à la valeur du paramètre de fonctionnement dans le deuxième mode de fonctionnement (F2), de préférence présentant un écart compris entre 25°C et 90°C, plus préférentiellement un écart de 30 °C dans le cas d'une température maximale de chauffage (T1, T2), de préférence un écart compris entre 2 heures et 4 heures, de préférence 3 heures dans le cas d'une durée maximale de chauffage (D1).

6. Bol chauffant (1) selon l'une des revendications 4 ou 5, dans lequel la durée maximale de chauffage (D1) dans le premier mode de fonctionnement (F1) est définie en fonction de la température maximale de chauffage (T1) dans le premier mode de fonctionnement (F1), et/ou la durée maximale de chauffage dans le deuxième mode de fonctionnement (F2) est définie en fonction de la température maximale de chauffage (T2) dans le deuxième mode de fonctionnement (F2).

7. Bol chauffant (1) selon l'une des revendications 1 à 6, comprenant un dispositif de contrôle des moyens de chauffage (2) et une interface homme-machine embarquée (3) disposée sur un corps (21) du bol chauffant (1) et reliée au dispositif de contrôle, et/ou une interface homme-machine débarquée et un module récepteur disposé sur un corps (21) du bol chauffant (1) et relié au dispositif de contrôle.

8. Bol chauffant (1) selon l'une des revendications 1 à 7, dans lequel le moyen de détection (27) comprend un contacteur, de préférence du type bouton poussoir.

9. Bol chauffant (1) selon l'une des revendications 1 à 8, comprenant une embase (20) agencée pour supporter une cuve amovible (10), et sur laquelle est relié le cordon d'alimentation électrique (4), le cas échéant sur laquelle est disposé l'interface homme-machine embarquée (3) et/ou le module récepteur.

10. Bol chauffant (1) selon la revendication 9, dans lequel la cuve (10) comprend les moyens de chauffage (2), la cuve (10) et l'embase (20) comprenant chacune un couple de contacts électriques complémentaires agencé pour assurer une continuité d'alimentation électrique entre la cuve (2) et l'embase (20).

11. Bol chauffant (1) selon l'une des revendications 9 ou 10, dans lequel le moyen de détection (27) est disposé sur l'embase (20).

12. Appareil électroménager de préparation culinaire (100) comportant :
- un bol chauffant (1) selon l'une des revendications 1 à 11, et
- un système électroménager (50) comprenant un moyen d'actionnement (54) du moyen de détection (27) du bol chauffant (1) agencé pour faire basculer le moyen de détection (27) depuis son premier état de fonctionnement (E1) vers son deuxième état de fonctionnement (E2) lorsque le bol chauffant (1) est amené depuis sa position découplée (P1) vers sa position couplée (P2) au système électroménager (50), et pour faire basculer le moyen de détection (27) depuis son deuxième état de fonctionnement (E2) vers son premier état de fonctionnement (E1) lorsque le bol chauffant (1) est amené depuis sa position couplée (P2) au système électroménager (50) vers sa position découplée (P1).

13. Appareil électroménager (100) selon la revendication 12, dans lequel le système électroménager (50) comprend un socle (51) comportant un logement (52) apte à recevoir le bol chauffant (1).

14. Appareil électroménager (100) selon la revendication 13, dans lequel le moyen d'actionnement (27) comprend une bordure (55) du logement (52).

15. Appareil électroménager (100) selon l'une des revendications 13 ou 14, dans lequel le socle (51) et le bol chauffant (1) comprennent chacun des moyens de fixations (26, 53) complémentaires, de préférence du type à baïonnette.

16. Appareil électroménager (100) selon l'une des revendications 12 à 15, dans lequel le système électroménager (50) comprend une prise d'alimentation électrique adapté au branchement électrique du cordon d'alimentation électrique (4) du bol chauffant (1).

17. Appareil électroménager (100) selon l'une des revendications 12 à 16, dans lequel le système électroménager (50) est un système de préparation culinaire comprenant des moyens d'entrainement d'un outil par le haut ou par le bas.

18. Appareil électroménager (100) selon l'une des revendications 12 à 17, dans lequel le bol chauffant 1 comprend un couvercle (17), l'appareil électroménager (100) comprenant un capteur de présence du couvercle (17) présentant :
- un premier état de fonctionnement défini lorsque le couvercle (17) est retiré de la cuve (10),
- un deuxième état de fonctionnement défini lorsque le couvercle (17) est placé sur la cuve (10),
le système électroménager (50) étant agencé pour fonctionner selon un premier mode de fonctionnement du moteur lorsque le moyen de détection (27) est dans son deuxième état de fonctionnement (E2) et que le capteur de présence du couvercle est dans son premier état de fonctionnement, et pour fonctionner selon un deuxième mode de fonctionnement du moteur lorsque le moyen de détection (27) est dans son deuxième état de fonctionnement (E2) et que le capteur de présence du couvercle est dans son deuxième état de fonctionnement.

19. Procédé d'utilisation d'un appareil électroménager (100) selon l'une des revendications 12 à 18 comprenant dans cet ordre des étapes consistant à :
(v) disposer le bol chauffant (1) dans sa position découplée (P1),
(vi) utiliser le bol chauffant (1) selon le premier mode de fonctionnement (F1),
(vii) disposer le bol chauffant (1) dans sa position couplée (P2) avec le système électroménager (50),
(viii) utiliser le bol chauffant (1) selon le deuxième mode de fonctionnement (F2).

## Patentansprüche

1. Heizschüssel (1) für Haushaltsgerätsystem (50), die einen Behälter (10), Heizmittels (2) des Behälters (10) und ein Netzkabel (4) umfasst, das dazu bestimmt ist, mit einer Stromversorgungsquelle verbunden zu sein, um autonom die Heizmittel (2) zu versorgen,
wobei die Heizschüssel (1) **dadurch gekennzeichnet ist, dass** sie ein Erfassungsmittel (27) des Koppelns der Heizschüssel (1) auf dem Haushaltsgerätsystem (50) umfasst, das Folgendes aufweist:
- einen ersten Betriebszustand (E1), der definiert ist, wenn die Heizschüssel (1) in einer abgekoppelten Position (P1) des Haushaltsgerätsystems (50) ist, und
- einen zweiten Betriebszustand (E2), der von dem ersten Betriebszustand (E1) unterschiedlich ist und definiert ist, wenn die Heizschüssel (1) in einer gekoppelten Position (P2) mit dem Haushaltsgerätsystem (50) ist,
wobei die Heizschüssel (1) eingerichtet ist, um gemäß einem ersten Betriebsmodus (F1) der Heizmittel (2) zu funktionieren, wenn das Erfassungsmittel (27) in seinem ersten Betriebszustand (E1) ist, und um gemäß einem zweiten Betriebsmodus (F2) der Heizmittel (2) zu funktionieren, der von dem ersten Heizmodus (F1) unterschiedlich ist, wenn das Erfassungsmittel (27) in seinem zweiten Betriebszustand (F2) ist.

2. Heizschüssel (1) nach Anspruch 1, die einen Anwesenheitssensor eines Deckels (17) des Behälters (10) der Heizschüssel (1) umfasst, der Folgendes aufweist:
- einen ersten Betriebszustand, der definiert ist, wenn der Deckel von dem Behälter (10) abgenommen ist,
- einen zweiten Betriebszustand, der definiert ist, wenn der Deckel auf dem Behälter (10) platziert ist,
wobei die Heizschüssel (1) eingerichtet ist, um gemäß einem dritten Betriebsmodus der Heizmittel (2) zu funktionieren, wenn das Erfassungsmittel (27) in seinem ersten Betriebszustand (E1) ist und der Anwesenheitssensor des Deckels in seinem zweiten Betriebszustand ist, und um gemäß einem vierten Betriebsmodus der Heizmittel (2) zu funktionieren, wenn das Erfassungsmittel (27) in seinem zweiten Betriebszustand (E2) ist und der Anwesenheitssensor des Deckels in seinem zweiten Betriebszustand ist.

3. Heizschüssel (1) nach einem der Ansprüche 1 oder 2, wobei die Heizmittel elektrisch nicht mehr versorgt werden, wenn das Erfassungsmittel (27) in seinem zweiten Betriebszustand (E2) ist und der Anwesenheitssensor des Deckels (17) in seinem ersten Betriebszustand ist.

4. Heizschüssel (1) nach einem der Ansprüche 1 bis 3, wobei der erste Betriebsmodus (F1) und der zweite Betriebsmodus (F2) und gegebenenfalls der dritte Betriebsmodus und der vierte Betriebsmodus sich durch einen Wert eines Betriebsparameters der Heizmittel unterscheiden, der eine maximale Heiztemperatur (T1, T2) der Heizmittel (2) umfasst, und/oder durch eine maximale Heizdauer (D1) der Heizmittel (2), und/oder durch ein Gefälle der Heiztemperatur in Abhängigkeit von der Zeit.

5. Heizschüssel (1) nach Anspruch 4, wobei der Wert des Betriebsparameters in dem ersten Betriebsmodus (F1) größer ist als der Wert des Betriebsparameters in dem zweiten Betriebsmodus (F2), vorzugsweise einen Unterschied zwischen 25 °C und 90 °C, bevorzugter einen Unterschied von 30 °C in dem Fall einer maximalen Heiztemperatur (T1, T2), vorzugsweise einen Unterschied zwischen 2 Stunden und 4 Stunden, vorzugsweise 3 Stunden in dem Fall einer maximalen Heizdauer (D1) aufweist.

6. Heizschüssel (1) nach einem der Ansprüche 4 oder 5, wobei die maximale Heizdauer (D1) in dem ersten Betriebsmodus (F1) in Abhängigkeit von der maximalen Heiztemperatur (T1) in dem ersten Betriebsmodus (F1) definiert ist, und/oder die maximale Heizdauer in dem zweiten Betriebsmodus (F2) in Abhängigkeit von der maximalen Heiztemperatur (T2) in dem zweiten Betriebsmodus (F2) definiert ist.

7. Heizschüssel (1) nach einem der Ansprüche 1 bis 6, der eine Steuervorrichtung der Heizmitteln (2) und eine Bord-Mensch-Maschine-Schnittstelle (3), die auf einem Körper (21) der Heizschüssel (1) angeordnet und mit der Steuervorrichtung verbunden ist, und/oder eine Mensch-Maschine-Schnittstelle nicht an Bord und ein Empfangsmodul, das auf einem Körper (21) der Heizschüssel (1) angeordnet und mit der Steuervorrichtung verbunden ist.

8. Heizschüssel (1) nach einem der Ansprüche 1 bis 7, wobei das Erfassungsmittel (27) einen Schalter, vorzugsweise vom Typ Drucktaste, umfasst.

9. Heizschüssel (1) nach einem der Ansprüche 1 bis 8, die eine Grundplatte (20) umfasst, die eingerichtet ist, um einen abnehmbaren Behälter (10) zu tragen, und auf der ein Netzkabel (4) verbunden ist, auf der gegebenenfalls die Bord-Mensch-Maschine-Schnittstelle (3) und/oder das Empfangsmodul angeordnet sind.

10. Heizschüssel (1) nach Anspruch 9, wobei der Behälter (10) Heizmittel (2) umfasst, wobei der Behälter (10) und die Grundplatte (20) jeweils ein Paar komplementärer elektrischer Kontakte umfassen, die eingerichtet sind, um eine Stromversorgungskontinuität zwischen dem Behälter (2) und der Grundplatte (20) sicherzustellen.

11. Heizschüssel (1) nach einem der Ansprüche 9 oder 10, wobei das Erfassungsmittel (27) auf der Grundplatte (20) angeordnet ist.

12. Haushaltsgerät zur Nahrungsmittelzubereitung (100), das Folgendes umfasst:
- eine Heizschüssel (1) nach einem der Ansprüche 1 bis 11 und
- ein Haushaltsgerätsystem (50), das ein Betätigungsmittel (54) des Erfassungsmittels (27) der Heizschüssel (1) umfasst, das eingerichtet ist, um das Erfassungsmittel (27) von seinem ersten Betriebszustand (E1) auf seinen zweiten Betriebszustand (E2) übergehen zu lassen, wenn die Heizschüssel (1) von ihrer abgekoppelten Position (P1) zu ihrer mit dem Haushaltsgerätsystem (50) gekoppelten Position gebracht wird, und um das Erfassungsmittel (27) von seinem zweiten Betriebszustand (E2) zu seinem ersten Betriebszustand (E1) übergehen zu lassen, wenn die Heizschüssel (1) von ihrer an das Haushaltsgerätsystem (50) gekoppelten Position (P2) zu ihrer abgekoppelten Position (P1) gebracht wird.

13. Haushaltsgerät (100) nach Anspruch 12, wobei das Haushaltsgerätsystem (50) eine Grundplatte (51) umfasst, die eine Aufnahme (52) umfasst, die geeignet ist, die Heizschüssel (1) aufzunehmen.

14. Haushaltsgerät (100) nach Anspruch 13, wobei des Betätigungsmittel (27) einen Rand (55) der Aufnahme (52) umfasst.

15. Haushaltsgerät (100) nach einem der Ansprüche 13 oder 14, wobei die Grundplatte (51) und die Heizschüssel (1) jeweils zueinander komplementäre Befestigungsmittel (26, 53), vorzugsweise vom Typ Bajonettverschluss, umfassen.

16. Haushaltsgerät (100) nach einem der Ansprüche 12 bis 15, wobei das Haushaltsgerätsystem (50) einen Stromstecker umfasst, der an den elektrischen Anschluss des Netzkabels (4) der Heizschüssel (1) angepasst ist.

17. Haushaltsgerät (100) nach einem der Ansprüche 12 bis 16, wobei das Haushaltsgerätsystem (50) ein Nahrungsmittelzubereitungssystem ist, das Mittel zum Antreiben eines Werkzeugs von oben oder von unten her umfasst.

18. Haushaltsgerät (100) nach einem der Ansprüche 12 bis 17, wobei die Heizschüssel (1) einen Deckel (17) umfasst, wobei das Haushaltsgerät (100) einen Anwesenheitssensor des Deckels (17) umfasst, der Folgendes aufweist:
- einen ersten Betriebszustand, der definiert ist, wenn der Deckel (17) von dem Behälter (10) abgenommen ist,
- einen zweiten Betriebszustand, der definiert ist, wenn der Deckel (17) auf dem Behälter (10) platziert ist,
wobei das Haushaltsgerätsystem (50) eingerichtet ist, um gemäß einem ersten Betriebsmodus des Motors zu funktionieren, wenn das Erfassungssystem (27) in seinem zweiten Betriebszustand (E2) ist und der Anwesenheitssensor des Deckels in seinem ersten Betriebszustand ist, und um gemäß einem zweiten Betriebszustand des Motors zu funktionieren, wenn das Erfassungsmittel (27) in seinem zweiten Betriebszustand (E2) ist und der Anwesenheitssensor des Deckels in seinem zweiten Betriebszustand ist.

19. Verfahren zum Verwenden eines Haushaltsgeräts (100) nach einem der Ansprüche 12 bis 18, das in dieser Reihenfolge Schritte umfasst, die daraus bestehen:
(v) die Heizschüssel (1) in ihrer abgekoppelten Position (P1) zu positionieren,
(vi) die Heizschüssel (1) gemäß dem ersten Betriebsmodus (F1) zu verwenden,
(vii) die Heizschüssel (1) in ihrer mit dem Haushaltsgerätsystem (50) gekoppelten Position (P2) anzuordnen,
(viii) die Heizschüssel (1) gemäß dem zweiten Betriebsmodus (F2) zu verwenden.

## Claims

1. Heated bowl (1) for an electrical household system (50) comprising a vessel (10), means (2) to heat the vessel (10), a power cord (4) intended to be connected to an electrical power source to autonomously power the heating means (2),
said heated bowl (1) being **characterised in that** it comprises means (27) to detect the coupling of the heated bowl (1) to the electrical household system (50) that features:
- a first operating state (E1) defined when the heated bowl (1) is in a position (P1) whereby it is uncoupled from the electrical household system (50),
- and a second operating state (E2), different from the first operating state (E1), and defined when the heated bowl (1) is in a position (P2) whereby it is coupled to the electrical household system (50),
the heated bowl (1) being arranged to operate according to a first operating mode (F1) of the heating means (2) when the detection means (27) is in its first operating state (E1), and to operate according to a second operating mode (F2) of the heating means (27), different from the first operating mode (F1), when the detection means (27) is in its second operating state (F2).

2. Heated bowl (1) according to claim 1, comprising a presence sensor (17) detecting the presence of a lid of the vessel (10) of the heated bowl (1) and featuring:
- a fist operating state defined when the lid is removed from the vessel (10),
- a second operating state defined when the lid is placed on the vessel (10),
the heated bowl (1) being arranged to operate according to a third operating mode of the heating means (2) when the detection means (27) is in its first operating state (E1) and the lid presence sensor is in its second operating state, and to operate according to a fourth operating mode of the heating means (2) when the detection means (27) is in its second operating state (E2) and the lid presence sensor is in its second operating state.

3. Heated bowl (1) according to one of claims 1 or 2, wherein the heating means are not electrically powered when the detection means (27) is in its second operating state (E2), and when the lid presence sensor (17) is in its first operating state.

4. Heated bowl (1) according to one of claims 1 to 3, wherein the first operating mode (F1) and the second operating mode (F2) and, as necessary, the third operating mode and the fourth operating mode are distinguishable by the value of an operating parameter of the heating means comprising a maximum heating temperature (T1, T2) of the heating means (2), and/or a maximum heating time (D1) of the heating means (2), and/or a slope of the heating temperature curve as a function of time.

5. Heated bowl (1) according to claim 4, wherein the value of the operating parameter in the first operating mode (F1) is greater than the value of the operating parameter in the second operating mode (F2), and preferably featuring a deviation ranging from 25°C to 90°C, more preferably a deviation of 30°C in the case of a maximum heating temperature (T1, T2), preferably a deviation ranging from 2 to 4 hours, preferably of 3 hours in the case of a maximum heating time (D1).

6. Heated bowl (1) according to one of claims 4 or 5, wherein the maximum heating time (D1) in the first operating mode (F1) is defined as a function of the maximum heating temperature (T1) in a first operating mode (F1), and/or the maximum heating time in the second operating mode (F2) is defined as a function of the maximum heating temperature (T2) in the second operating mode (F2).

7. Heated bowl (1) according to one of claims 1 to 6, comprising a device for controlling the heating means (2) and an on-board human-machine interface (3) arranged on a body (21) of the heated bowl (1) and connected to the control device, and/or an off-board human-machine interface and a receiver module arranged on a body of the heated bowl (1) and connected to the control device.

8. Heated bowl (1) according to one of claims 1 to 7, wherein the detection means (27) comprises a contactor, preferably of the push-button type.

9. Heated bowl (1) according to one of claims 1 to 8, comprising a base (20) arranged to support a removable vessel (10), and whereon the electrical power cord (4) is connected, and as necessary whereon the on-board human-machine interface (3) and/or the receiver module are arranged.

10. Heated bowl (1) according to claim 9, wherein the vessel (10) comprises heating means (2), the vessel (10) and the base (20) each comprising a pair of complementary electrical contacts arranged to ensure electrical power continuity between the vessel (2) and the base (20).

11. Heated bowl (1) according to one of claims 9 or 10, wherein the detection means (27) is arranged on the base (20).

12. Electrical household appliance for cooking (100) comprising:
- a heated bowl (1) according to one of claims 1 to 11, and
- an electrical household system (50) comprising means (54) to actuate the detection means (27) of the heated bowl (1) arranged to switch the detection means (27) from its first operating state (E1) to its second operating state (E2) when the heating bowl (1) is brought from its uncoupled position (P1) to its position (P2) whereby it is coupled to the electrical household system (50), and to switch the detection means (27) from its second operating state (E2) to its first operating state (E1) when the heated bowl is brought from its position (P2) whereby it is coupled to the electrical household system (50) to its decoupled position (P1).

13. Electrical household appliance (100) according to claim 12, wherein the electrical household system (50) comprises a stand (51) comprising a housing (52) able to receive the heated bowl (1).

14. Electrical household appliance (100) according to claim 13, wherein the actuating means (27) comprises an edge (55) of the housing (52).

15. Electrical household appliance (100) according to one of claims 13 or 14, wherein the stand (51) and the heated bowl (1) each comprises complementary attachment means (26, 53), preferably of the bayonet type.

16. Electrical household appliance (100) according to one of claims 12 to 15, wherein the electrical household system (50) comprises an electrical power socket adapted for the connection of the electrical power cord (4) to the heated bowl (1).

17. Electrical household appliance (100) according to one of claims 12 to 16, wherein the electrical household system (50) is a cooking system comprising means to drive a tool from the top or from the bottom.

18. Electrical household appliance (100) according to one of claims 12 to 17, wherein the heating bowl 1 comprises a lid (17), the electrical household appliance (100) comprising a lid presence sensor (17) that features:
- a first operating state defined when the lid (17) is removed from the vessel (10),
- a second operating state defined when the lid (17) is placed on the vessel (10), the electrical household system (50) being arranged to operate according to a first operating mode of the motor when the detection means (27) is in its second operating state (E2) and when the lid presence sensor is in its first operating state, and to operate according to a second operating mode of the motor when the detection means (27) is in its second operating state (E2) and the lid presence sensor is in its second operating state.

19. Method for using an electrical household appliance (100) according to one of claims 12 to 18, comprising in the following order the steps consisting in:
v. arranging the heated bowl (1) in its uncoupled position (PI),
vi. using the heated bowl (1) according to the first operating mode (F1),
vii. arranging the heated bowl (1) in the position (P2) whereby it is coupled to the electrical household system (50),
viii. using the heated bowl (1) according to the second operating mode (F2).
